(19) Europäisches Patentamt
European Patent Office
Office européen des brevets

(11) **EP 3 752 764 B1**

(12) **EUROPÄISCHE PATENTSCHRIFT**

(45) Veröffentlichungstag und Bekanntmachung des Hinweises auf die Patenterteilung:
**20.11.2024  Patentblatt 2024/47**

(21) Anmeldenummer: **19704756.6**

(22) Anmeldetag: **05.02.2019**

(51) Internationale Patentklassifikation (IPC):
*F17C 13/08* *(2006.01)*

(52) Gemeinsame Patentklassifikation (CPC):
**F17C 13/084;** F17C 2201/0109; F17C 2201/035;
F17C 2201/056; F17C 2201/058; F17C 2205/0107;
F17C 2205/0111; F17C 2205/0126;
F17C 2205/0188; F17C 2205/0192;
F17C 2205/0314; F17C 2205/0326;
F17C 2205/0332; F17C 2221/012; F17C 2221/033;

(Forts.)

(86) Internationale Anmeldenummer:
**PCT/EP2019/052747**

(87) Internationale Veröffentlichungsnummer:
**WO 2019/158395 (22.08.2019 Gazette 2019/34)**

(54) **VORRICHTUNG ZUM BEFÜLLEN VON GASSPEICHERN**

DEVICE FOR FILLING GAS HOLDERS

DISPOSITIF DE REMPLISSAGE DE RÉSERVOIRS DE GAZ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.02.2018  DE 202018100884 U**

(43) Veröffentlichungstag der Anmeldung:
**23.12.2020  Patentblatt 2020/52**

(73) Patentinhaber: **Bundesrepublik Deutschland, Vertreten Durch Die Bundesministerin für Wirtschaft und Energie, Diese vertreten durch den Präsidenten der 12205 Berlin (DE)**

(72) Erfinder:
• **MAIR, Georg W.**
 **14979 Großbeeren (DE)**
• **SCHOPPA, André**
 **12529 Schönefeld (DE)**
• **SZCZEPANIAK, Mariusz**
 **14624 Dallgow Döberitz (DE)**

(74) Vertreter: **Zimmermann & Partner Patentanwälte mbB Postfach 330 920 80069 München (DE)**

(56) Entgegenhaltungen:
WO-A2-2011/112110    WO-A2-2012/071593
DE-A1- 102013 214 044    DE-B3- 102015 218 230
US-A- 2 552 783    US-A- 5 096 006
US-A1- 2013 337 737

(52) Gemeinsame Patentklassifikation (CPC): (Forts.)
F17C 2223/0123; F17C 2223/036;
F17C 2225/0123; F17C 2225/036;
F17C 2227/0157; F17C 2227/04; F17C 2227/044;
F17C 2250/032; F17C 2250/0421; F17C 2250/043;
F17C 2250/0439; F17C 2260/024; F17C 2260/026;
F17C 2265/063; Y02E 60/32

**Beschreibung**

Die vorliegende Erfindung betrifft eine Vorrichtung zum Befüllen von Gasspeichern, insbesondere eine Vorrichtung zum Befüllen von Druckbehältern, Prüfmustern für z.B. eine Brandsicherheitsprüfung und Treibgasspeichern für komprimierte Gase wie bspw. komprimiertes Erdgas und komprimierter Wasserstoff, die typischerweise ein geometrisches Innenvolumen von zumindest 10 Litern oder sogar zumindest 200 Litern und/oder eine Druckfestigkeit von zumindest 200 bar aufweisen.

Außerdem beschreibt die Druckschrift US 5 096 006 A eine Vorrichtung zur Lagerung von Chlorgas in einem unterirdisch gelagerten Sicherheitsbehälter. Das Gas wird in einem herkömmlichen Zylinder gelagert, der durch ein Gestell mit einem Bügel oben zum Anheben des Gestells in den Behälter hinein und aus ihm herausgehoben wird. In dem Behälter ist eine Waage montiert, und das Gestell ruht auf der Waage. Eine oberirdische Ventilvorrichtung verschließt den Behälter, und geeignete Vakuum- und Entlüftungsleitungen sind mit einem oben auf dem Zylinder montierten Regler verbunden.

Bisher werden Druckbehälter und Treibgasspeicher üblicherweise nach Maßgabe des Drucks gefüllt. Da der Druck in einem geschlossenen Raum unmittelbar von der Temperatur abhängt, muss für eine exakte Füllung auf den Solldruck, der häufig auch als Nennbetriebsdruck (NWP) bezeichnet wird, bei einer Referenztemperatur von bspw. 15°C, die Temperatur im Druckbehälter homogen und genau bekannt sein. Da die Temperatur aber im Behälter ungleichmäßig stark durch eine Befüllung verändert wird, ist es im Zeitrahmen von wenigen Minuten bis Stunden nicht ohne erheblichen Aufwand möglich, die für eine exakte Füllung notwendige Information zur Temperaturverteilung zu bekommen.

Auch beim Befüllvorgang an Tankstellen kann die inhomogene Temperatur am Tank nicht hinreichend zuverlässig gemessen und/oder nicht flächendeckend verlässlich mit der Tankstelle kommuniziert werden.

Damit ist die verbreitete Füllung nach Druck innerhalb akzeptabler Füllzeiten ein relativ ungenauer Vorgang. Insbesondere in Prüfungen, wie der Brandprüfung, bei denen der Füllgrad einen unmittelbaren Einfluss auf das Prüfergebnis hat, wirkt sich diese ungenaue Form der Füllung besonders negativ aus: Prüfergebnisse sind dann kaum reproduzierbar. Auch ist oft nicht nachvollziehbar, in wie weit eine festgestellte Streuung aus den Prüfmustereigenschaften, Variationen aus der Belastung (z.B. Brandlast) oder nur aus dem unbeabsichtigten Unterschieden im Füllgrad kommen.

Im Hinblick auf das oben Gesagte, schlägt die vorliegende Erfindung eine Vorrichtung zum Befüllen von Gasspeichern gemäß Anspruch 1 vor.

Gemäß einer Ausführungsform umfasst eine Vorrichtung zum Befüllen von Gasspeichern einen Rahmen und/oder ein Gehäuse, einen zum Rahmen und/oder zum Gehäuse beweglich angeordneten und drehbar gelagerten Gaspufferspeicher für ein Gas, ein erstes Ventil aufweisend, einen mit dem Gaspufferspeicher verbundenen Eingang und einen Ausgang zum Verbinden mit einem zu befüllenden Gasspeicher, und eine mit dem Gaspufferspeicher verbundene Wägevorrichtung zum Wiegen des Gaspufferspeichers.

Im Folgenden wird die Vorrichtung zum Befüllen von Gasspeichern auch als Befüllvorrichtung und Druckgasbefüllvorrichtung bezeichnet. Ungeachtet dessen kann die Vorrichtung auch zum Prüfen bzw. Testen von Ventilen verwendet werden.

Die Befüllvorrichtung ermöglicht eine Füllung des Gasspeichers aus dem vorher gefüllten Gaspufferspeichers, die auf einer Wägung des beweglich gelagerten Gaspufferspeichers basiert. Da die Temperaturverteilung im System für die Füllmenge des zu befüllenden Gasspeichers bei dieser Art der Befüllung praktisch bedeutungslos ist, können die oben genannten Nachteile einer Füllung nach Druck auf eine einfache Weise vermieden werden.

Dies ließe sich im Prinzip zwar auch durch eine Wägung des zu befüllenden Gasspeichers erreichen. Die hinreichend genaue Wägung des zu befüllenden Gasspeichers ist jedoch oft entweder nicht möglich, z.B. beim Betanken von Fahrzeugen, oder zumindest nicht praktikabel. Auch lassen sich dabei externe Fehlerquellen wie Wind und Niederschläge häufig allenfalls nur sehr aufwendig berücksichtigen. Bei wechselnden Prüfmustergrößen/Gasspeichergrößen, bzw. -gewichten müsste eine entsprechende Apparatur dann zudem jeweils im Detail aufwendig optimiert und angepasst werden. Außerdem sollte ein gefüllter Gasspeicher als Prüfmuster bei Sicherheitsprüfungen wie einer Brandprüfung aus Sicherheitsgründen in der Regel nicht mehr angefasst werden, was dann in der Prüfung zum Verlust der teuren Wägeeinrichtung führen würde.

Typischerweise ist der Gaspufferspeicher innerhalb des Rahmens und/oder des Gehäuses angeordnet. Dadurch kann die Wägung des beweglich gelagerten Gaspufferspeichers gut von äußeren Einflüssen entkoppelt werden und die Befüllvorrichtung auch im Freien, insbesondere in der Nähe und/oder als Teil eines Brandprüfplatzes oder eines anderen Sicherheitspolitikplatzes eingesetzt werden.

Außerdem kann die Befüllvorrichtung vier oder mehr mit dem Rahmen und/oder dem Gehäuse verbundene Räder, Staplertaschen, Transport- und/oder Anschlagösen aufweisen. Dadurch kann der Transport der Befüllvorrichtung erleichtert werden.

Typischerweise ist der Gaspufferspeicher um eine zumindest im Wesentlichen horizontal orientierte erste

Achse drehbar gelagert, d.h. um eine erste Achse drehbar gelagert, deren Winkelabweichung von der Horizontalen maximal 10° oder sogar nur maximal 3° beträgt.

Beispielsweise kann ein typischerweise zumindest im Wesentlichen zylinderförmiger Gaspufferspeicher, z.B. eines Gaspufferspeicher der abgesehen von End- bzw. Anschlussbereichen zylinderförmig ist, an einem ersten Ende mittels eines Klemmlagers gelagert sein.

Das Klemmlager kann translatorisch in alle Richtungen fest mit dem Rahmen und/oder dem Gehäuse verbunden sein und eine Rotation um die erste Achse zulassen.

Typischerweise hemmt das Klemmlager aber eine Rotationsbewegung des Gaspufferspeichers um zur ersten Achse senkrecht orientierte Achsen.

Damit kann die (Dreh-) Bewegung des Gaspufferspeichers beim Befüllen des Gasspeichers zumindest im Wesentlichen auf eine Drehbewegung um die erste Achse eingeschränkt werden. Dies erleichtert eine störunanfällige Wägung des Gaspufferspeichers beim Befüllen des Gasspeichers.

Alternativ oder ergänzend kann eine zumindest im Wesentlichen vertikal orientierte Führung zur Beschränkung einer translatorischen Bewegung eines dem ersten Ende gegenüberliegenden zweiten Endes des Gaspufferspeichers in eine zur ersten Achse parallelen Richtung vorgesehen sein.

Um ein Auftreten mechanischer Spannungen aufgrund der Bewegung und einer (druckabhängigen) Längenänderung des Gaspufferspeichers u.a. beim Befüllen des Gasspeichers zu verhindern, ist das zweiten Ende in diesem Ausführungsbeispiel in zur ersten Achse senkrecht orientierten Richtungen typischerweise beweglich gelagert.

Insbesondere kann das zweite Ende über die Wägevorrichtung mit dem Rahmen und/oder dem Gehäuse verbunden sein, wobei das zweite Ende beweglich zur Wägevorrichtung ist bzw. von der Wägevorrichtung in der vertikalen gehalten wird.

Dabei ist die Wägevorrichtung typischerweise fest mit dem Rahmen und/oder dem Gehäuse verbunden.

Außerdem kann die Wägevorrichtung unterhalb oder oberhalb des Gaspufferspeichers angeordnet sein.

Typischerweise ist die Wägevorrichtung über einen flexiblen Haltemechanismus bzw. ein flexibles Verbindungselement mit dem Gaspufferspeicher, insbesondere seinem zweiten Ende verbunden.

Dadurch kann erreicht werden, dass die Bewegung des Gaspufferspeichers beim Befüllen des Gasspeichers die Messgenauigkeit der Wägevorrichtung nicht oder zumindest nur unwesentlich beeinflusst.

Wenn die Wägevorrichtung unterhalb des Gaspufferspeichers angeordnet ist, kann das flexible Verbindungselement von einem hydraulischen Dämpfer oder einer Feder, z.B. einer Stahlfeder gebildet werden, und/oder den hydraulischen Dämpfer und/oder die Feder umfassen.

Wenn die Wägevorrichtung oberhalb des Gaspufferspeichers angeordnet ist, kann das flexible Verbindungselement ein Seil, eine Kette und/oder einen biegeweichen Stab aufweisen und/oder von einem Seil, einer Kette oder einem biegeweichen Stab gebildet werden.

Dabei kann das Seil oder die Kette Stahl enthalten oder sogar aus Stahl bestehen.

Der biegeweiche Stab kann zum Beispiel von einer CFK-Blattfeder gebildet werden.

Alternativ oder ergänzend kann die Wägevorrichtung über mindestens ein Gelenk, z.B. ein oder zwei Gelenke mit dem Gaspufferspeicher, insbesondere dessen zweiten Ende verbunden sein.

Typischerweise ist eine Drehachse des mindestens einen Gelenks parallel zur ersten Achse. Noch typischer weist das mindestens eine Gelenk nur eine entsprechende Drehachse auf.

Die Wägevorrichtung kann eine Wägezelle aufweisen oder sogar von einer Wägezelle gebildet werden. Beispielsweise kann die Wägezelle einen Dehnungsmessstreifen aufweisen.

Um eine hinreichend genaue Messung der Füllmenge zu ermöglichen, hat die Wägevorrichtung bei gegebener Temperatur je nach Gasart und zu befüllender Gasmenge eine dem Druck entsprechende Gewichtsauflösung, die äquivalent zu einer Auflösung des Druckes im Gasspeichern von zumindest 2 bar oder sogar mindestens 1 bar ist.

Die Umrechnung der Gewichtsauflösung in einer Auflösung des Druckes p kann z.B. anhand einer Zustandsgleichung realer Gase vorgenommen werden, insbesondere über die thermische Zustandsgleichung idealer Gase, die um einen Realgasfaktor Z ergänzt wurde:

$$p*V=Z*R*T.$$

Beispielsweise beträgt der Realgasfaktor für Erdgas bei einer Temperatur von T von 293,15 K (20°C) Z=0,813.

Damit erhält man für einen mit Erdgas (mit einer molaren Masse von 16,043 g/mol) bei einem Druck von 200 bar gefüllten 50 l Gasspeicher eine Masse m des eingefügten Erdgases von 8,096 kg. Unter diesen Bedingungen entspricht ein Druckunterschied von 1 bar ca. 40 g.

Dementsprechend hat die Wägevorrichtung typischerweise eine relative Gewichtsauflösung (Auflösung in kg / Wägebereich in kg) von zumindest 1% oder 0.5% sogar 0.4% (40 g / 10 kg).

Damit lassen sich erheblich genauere Befüllungen als bei einer druckgesteuerten Gasbefüllung erreichen. Wenn ein 50 l Gasbehälter bei 200 bar Druckgeregelt mit Erdgas befüllt wird und es dabei zu einer angenommenen, effektiven mittleren Temperaturerhöhung auf 50°C kommt (auf 323,15°K, Realgasfaktor Z=0,879), wird der Gasbehälter nur mit ca. 6,7 kg befüllt, was einem Unterschied/Fehler von ca. 16 % entspricht!

Diese Beispielrechnung zeigt, dass im Vergleich zur Befüllung des Gasspeichers nach Druck, über eine Bestimmung der Gasmasse im Gaspufferspeicher mittels Wägung, insbesondere einer laufenden Wägung der Gasmasse im Gaspufferspeicher während des Füllvorgangs eines Gasspeichers (bspw. eines Prüfmusters, eines eingebauten Kfz-Tanks, oder eines anderen Gasbehälters) bzw. eines Abströmvorgangs (z.B. für die Prüfung von Ventilen) eine deutliche Erhöhung der Genauigkeit der Füllmenge (Masse) bzw. der Abströmmenge erreicht werden kann.

Insbesondere für hohe Drücke kann die gewünschte Gewichtsauflösung typischerweise genauer über Wertetabellen zu den p-T-m Beziehungen für die Gase oder Gasgemische bzw. zugehörigen Interpolationsfunktionen berechnet werden. Beispielsweise können die jeweiligen p-T-m Beziehungen der "REFPROP" Datenbank ("Reference Fluid Thermodynamic and Transport Properties Database") des NIST ("National Institute of Standards and Technology", Gaithersburg, Maryland, USA) entnommen werden.

Je nach zu befüllendem Gasspeicher kann der Wägebereich der Wägevorrichtung zumindest 10 kg oder sogar 1000 kg betragen.

Ein typischerweise mit Wasser ausgelitertes Innenvolumen des Gaspufferspeichers kann mindestens 10 l, mindestens 200 l oder sogar von mindestens 500 l betragen.

Der Eingang des ersten Ventils kann fluidisch mit dem Gaspufferspeicher, insbesondere mit dessen erstem Ende verbunden sein, typischerweise über eine flexible erste fluidische Verbindung oder über mindestens ein zweites Ventil, das über die flexible erste fluidische Verbindung mit dem Gaspufferspeicher verbundenen sein kann.

Durch die Verwendung einer flexiblen ersten fluidischen Verbindung zum Gaspufferspeicher können Messeinflüsse auf die Wägung zumindest weitgehend ausgeschlossen werden.

Die flexible erste fluidische Verbindung kann ein Schlauch oder eine Rohrspirale aufweisen oder von einem Schlauch oder eine Rohrspirale gebildet werden.

Das erste Ventil und/oder das mindestens eine zweite Ventil sind typischerweise steuerbar bzw. regelbar.

Um ein zumindest weitgehend automatisches Befüllen des Gasspeichers zu ermöglichen, weist die Befüllvorrichtung gemäß einer Weiterbildung eine Steuer- oder Regeleinheit auf, die mit dem ersten Ventil, dem mindestens einen zweiten Ventil und/oder der Wägevorrichtung verbunden ist, und eingerichtet ist, ein Öffnen und/ oder ein Schließen des jeweiligen Ventils auszulösen, Messwerte von der Wägevorrichtung zu erhalten, und/oder die erhaltenen Messwerte zum Öffnen und/oder Schließen des/der Ventile zu verwenden.

Typischerweise ist die Steuer- oder Regeleinheit dabei eingerichtet, das Schließen des ersten Ventils auszulösen, wenn die Messwerte eine vorgebbare Schwelle erreichen oder unterschreiten und/oder eine vorgebbare Differenz (Massendifferenz) zu einem initialen Messwert vor einem Öffnen des ersten Ventils erreicht oder überschreitet.

Außerdem kann aus Sicherheitsgründen an dem Gaspufferspeicher ein erster Temperatursensor angeordnet sein und/oder der zu befüllende Gasspeicher mit einem zweiten Temperatursensor versehen werden.

Der erste Temperatursensor und/oder der zweite Temperatursensor sind typischerweise mit der Steuer- oder Regeleinheit und/oder einer Anzeigeeinheit verbunden. Die Anzeigeeinheit kann mit der Steuer oder Regeleinheit verbunden sein.

Typischerweise ist die Steuer- oder Regeleinheit eingerichtet ist, das Öffnen des ersten Ventils zum Befüllen des zu befüllenden Gasspeichers erst dann auszulösen, wenn ein vom ersten Temperatursensor übermittelter Temperaturmesswert einen vorgebbaren ersten Schwellenwert erreicht oder unterschreitet.

Außerdem kann die Steuer- oder Regeleinheit eingerichtet sein, das Schließen des ersten Ventils auszulösen, wenn der vom ersten Temperatursensor übermittelte Temperaturmesswert einen vorgebbaren zweiten Schwellenwert erreicht oder überschreitet, und/oder wenn ein vom zweiten Temperatursensor übermittelter Temperaturmesswert einen vorgebbaren dritten Schwellenwert erreicht oder überschreitet.

Außerdem kann nicht zuletzt aus Sicherheitsgründen ein mit dem Gaspufferspeicher fluidisch verbundener erster Drucksensor, und/oder einen mit dem zu befüllenden Gasspeicher verbindbarer oder mit einer zweiten fluidischen Verbindung, die mit dem Ausgang des ersten Ventils verbunden ist, verbundenen zweiten Drucksensor vorgesehen sein.

Typischerweise sind der erste Drucksensor und/oder der zweite Drucksensor mit der Steuer-oder Regeleinheit und/oder der Anzeigeeinheit verbunden.

Die Steuer- oder Regeleinheit kann eingerichtet sein, das Öffnen des ersten Ventils zum Befüllen des zu befüllenden Gasspeichers erst dann auszulösen, wenn ein vom ersten Drucksensor übermittelter Druckmesswert einen vorgebbaren Schwellenwert erreicht oder überschreitet.

Außerdem kann die Steuer- oder Regeleinheit eingerichtet sein, das Schließen des ersten Ventils auszulösen, wenn ein vom zweiten Drucksensor übermittelter Druckmesswert einen vorgebbaren weiteren Schwellenwert erreicht oder überschreitet.

Typischerweise weist die Befüllvorrichtung, insbesondere der Gaspufferspeicher, jeweilige Ventile, die flexible erste fluidische Verbindung und die zweite fluidische Verbindung eine Druckfestigkeit von zumindest 200 bar, zumindest 700 bar, zumindest 1000 bar oder sogar zumindest 1200 bar auf.

Außerdem kann einer oder mehrerer mit dem Gaspufferspeicher fluidisch verbundene, entsprechend gelagerte weitere Gaspufferspeicher vorgesehen sein, die mechanisch mit der Wägevorrichtung und/oder dem Gaspufferspeicher verbunden sind.

Bei gleicher Temperatur, symmetrischem Leitungsanschluss der fluidisch kommunizierenden, parallel geschalteten Gaspufferspeichern und nicht zu hohen Füllraten kann es aber auch ausreichen, nur einen der mehreren Gaspufferspeicher entsprechend beweglich zu lagern und beim Befüllen des Gasspeichers zu wiegen. Dann können der bzw. die weiteren Gaspufferspeicher fixiert sein.

Weiterhin kann eine Temperierungseinheit zum Einstellen und/oder Absenken einer Temperatur des Gaspufferspeichers bzw. der Gaspufferspeicher, zum Beispiel während oder nach dem Befüllen des Gaspufferspeichers bzw. der Gaspufferspeicher vorgesehen sein. Dadurch kann die Befüllvorrichtung nach dem Befüllen des Gaspufferspeichers bzw. der Gaspufferspeicher schneller wieder zum Befüllen zu befüllender Gasspeicher eingesetzt werden.

Außerdem können einen Kompressor und ein drittes Ventil vorgesehen sein, wobei der Kompressor typischerweise mit einer oder mehreren Druckgasflaschen verbunden ist und über das dritte Ventil mit dem Gaspufferspeicher fluidisch verbindbar ist.

Außerdem können zum Reinigen des Gaspufferspeichers, eine Spühleinheit zum Einleiten von Spühlgasen in den Gaspufferspeicher und/oder eine Evakuiereinheit zum Evakuieren des Gaspufferspeichers, zum Beispiel eine Unterdruckpumpe vorgesehen sein.

Typischerweise ist die Spühleinheit über ein viertes Ventil mit dem Gaspufferspeicher, insbesondere seinem ersten Ende fluidisch verbindbar bzw. je nach Ventilzustand/Ventilzuständen fluidisch verbunden.

Außerdem ist die Evakuiereinheit typischerweise über ein fünftes Ventil mit dem Gaspufferspeicher, insbesondere seinem ersten Ende fluidisch verbindbar bzw. je nach Ventilzustand/Ventilzuständen fluidisch verbunden.

Typischerweise ist das mindestens eine zweite Ventil zwischen dem ersten Ventil und dem Gaspufferspeicher angeordnet, zwischen dem dritten Ventil und dem Gaspufferspeicher angeordnet, und/oder zwischen dem vierten Ventil und dem Gaspufferspeicher angeordnet.

Außerdem können der Kompressor, die Spühleinheit, die Evakuiereinheit, das dritte Ventil, das vierte Ventil, und/oder das fünfte Ventil steuerbar und/oder regelbar und mit der Steuer-oder Regeleinheit verbunden sein.

Aus Sicherheitsgründen sind zudem das ersten Ventil, das mindestens eine zweite Ventil, das dritte Ventil, das vierte Ventil und/oder das fünfte Ventil Magnetventile, druckluftgesteuert, und/oder in einem jeweiligen unversorgten Zustand geschlossen.

In einem Fall von Kontrollverlust (durch z.B. Stromausfall) kann so der Gaspufferspeicher in jede Richtung abgesperrt und somit ein stabiler Zustand für den Gaspufferspeicher und den zu füllen Gasbehälter hergestellt werden.

Beim Auftreten über Druck- und/oder Temperaturdaten von der Steuer- oder Regeleinheit detektierten kritischen Situationen (durch z.B. Gefahr einer Brandlast oder einer Impaktbelastung des Gaspufferspeichers) kann die Steuer- oder Regeleinheit eingerichtet sein, ein Entspannen der Gaspufferspeicher bspw. über ein zusätzliches Entlastungsventil / Entlastungsdüse auszulösen.

Die vorstehend beschriebenen Ausführungsformen können beliebig miteinander kombiniert werden.

Weitere vorteilhafte Ausgestaltungen, Einzelheiten, Aspekte und Merkmale der vorliegenden Erfindung ergeben sich aus den Unteransprüchen, der Beschreibung sowie den beigefügten Zeichnungen. Darin zeigt:

Fig. 1A eine schematische Seitenansicht einer Vorrichtung zum Befüllen von Gasspeichern gemäß einem Ausführungsbeispiel;

Fig. 1B eine weitere schematische Seitenansicht der in Fig. 1A gezeigten Vorrichtung zum Befüllen von Gasspeichern gemäß einem Ausführungsbeispiel;

Fig. 1C eine schematische Seitenansicht einer Vorrichtung zum Befüllen von Gasspeichern gemäß einem Ausführungsbeispiel;

Fig. 2A eine schematische Seitenansicht einer Vorrichtung zum Befüllen von Gasspeichern gemäß einem Ausführungsbeispiel;

Fig. 2B eine weitere schematische Seitenansicht der in Fig. 2A gezeigten Vorrichtung zum Befüllen von Gasspeichern gemäß einem Ausführungsbeispiel;

Fig.2C eine schematische Aufsicht der in Fig. 2A gezeigten Vorrichtung zum Befüllen von Gasspeichern gemäß einem Ausführungsbeispiel; und

Fig. 3 eine schematische Seitenansicht einer Vorrichtung zum Befüllen von Gasspeichern gemäß einem Ausführungsbeispiel;

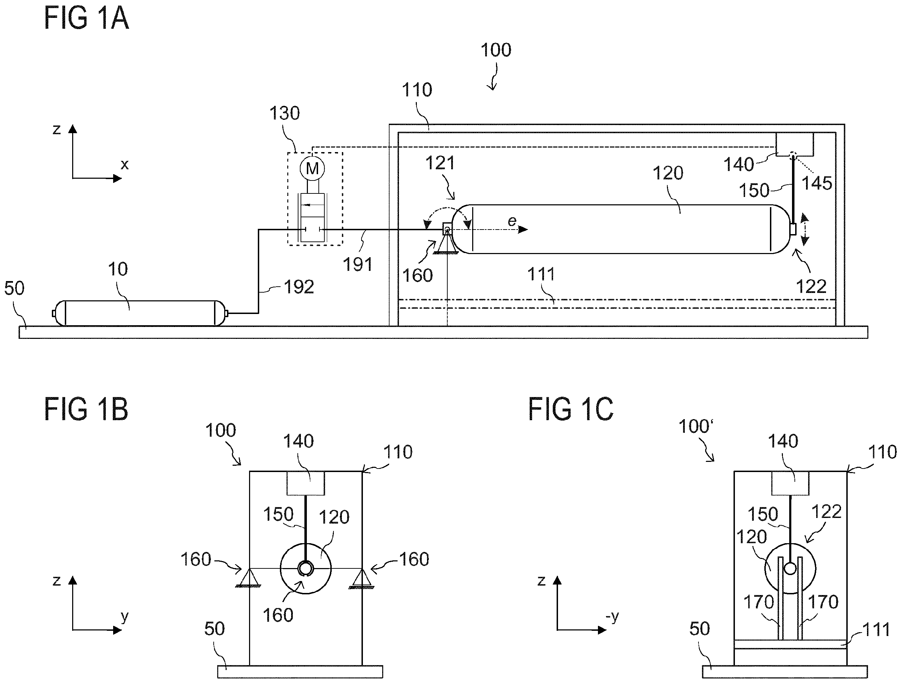

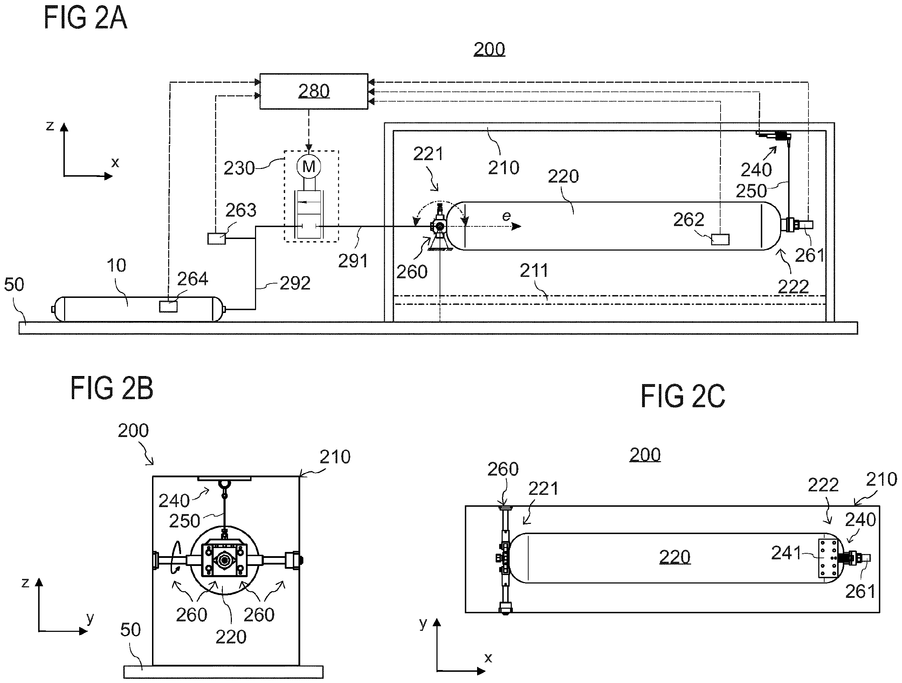

In den Figuren bezeichnen gleiche Bezugszeichen bzw. Bezugszeichen, deren erste Ziffer mit einer Ziffer einer Figurenbezeichnung übereinstimmt entsprechend ähnliche Teile oder Elemente. Beispielsweise kann ein in einer Figur 2A mit einem Bezugszeichen 230 versehenes Teil einem gleichen oder ähnlichen Teil in einer Figur 1A mit einem Bezugszeichen 130 entsprechen.

Fig. 1A zeigt eine schematische Seitenansicht einer Vorrichtung 100 zum Befüllen von Gasspeichern 10 mit einem Gaspufferspeicher 120. Bei dem dargestellten zu befüllen Gasspeicher 10 kann es sich z.B. um einen einem Sicherheitstest zu unterziehenden Gasdruckbehälter handeln.

In dem exemplarischen Ausführungsbeispiel ist der Gaspufferspeicher 120 beweglich innerhalb eines Rahmens oder Gehäuses 110 angeordnet, der auf einem Boden 50 steht.

Aus Gründen der Einfachheit bezieht sich die folgende Beschreibung auf den Rahmen. Es versteht sich jedoch, dass der Rahmen zumindest teilweise verkleidet sein kann bzw. durch ein Gehäuse ersetzt sein kann.

Der im Wesentlichen zylinderförmige exemplarische Gaspufferspeicher 120 ist an seinem (linken) ersten Ende 121 mittels eines Klemmlagers 160 gelagert.

Wie in Figur 1A durch die gestrichelte vertikale Linie unterhalb des Klemmlagers dargestellt wird, kann das Klemmlager 160 auf dem Boden 50 ruhen.

In dieser und den folgenden Figuren ist zur besseren Orientierung jeweils ein Kartesisches Koordinatensystem mit dargestellt, wobei die z-Richtung die vertikaler Richtung repräsentiert und die x- bzw. y-Richtung zueinander orthogonal horizontale Richtungen repräsentieren.

Bevorzugt ist das Klemmlager 160 jedoch am Rahmen 110, zum Beispiel an einer Bodenplatte oder Querstrebe 111 befestigt.

Das Klemmlager 160 ist typischerweise so ausgeführt, dass der Gaspufferspeicher 120 um eine erste, in y-Richtung orientierte Achse beweglich ist. Beispielsweise kann das Klemmlager 160 so ausgeführt sein, dass eine Längsachse "e" des Gaspufferspeichers 120 zumindest um mehrere Grad oder sogar mehrere 10° um die erste Achse bewegbar ist. Diese Werte können aber von der Form und insbesondere von der Länge des Gaspufferspeichers (Abstand zwischen den Enden 121, 122) abhängen.

Außerdem kann das Klemmlager 160 so ausgeführt sein, dass eine Bewegung des Gaspufferspeichers 120 um weitere Achsen gehemmt ist.

An einem dem ersten Ende ein 121 gegenüberliegenden zweiten Ende 122 ist der Gaspufferspeicher 120 über ein flexibles Verbindungselement 150 mit einer Wägevorrichtung 140 verbunden, die fest innerhalb des Rahmens 110 und oberhalb des zweiten Endes 122 angeordnet ist.

Wie in Figur 1A durch den gestrichelten Kreis dargestellt ist, kann das Verbindungselement 150 auch über ein Gelenk 145 mit der Wägevorrichtung 140 verbunden sein.

In dem exemplarischen Ausführungsbeispiel ist das erste Ende 121 über eine flexible erste fluidische Verbindung 191 fluidisch mit einem Eingang eines ersten Ventil 130 verbunden, dessen Ausgang über eine zweite fluidische Verbindung 192 mit dem zu befüllenden Gasspeicher 10 verbunden ist.

Das Ventil 130 kann fest mit dem Rahmen 110 verbunden sein.

Anders als in Figur 1C dargestellt wird, kann das Ventil 130 auch innerhalb des Rahmens angeordnet sein.

Das Ventil 130 kann zum Öffnen und Schließen einer fluidischen Verbindung zwischen dem Gaspufferspeicher 120 und dem Gasspeicher 10 eingesetzt werden.

Wenn das Ventil 130 geöffnet ist, kann zum Befüllen des Gasspeichers 10 ein Gasstrom aus dem Gaspufferspeicher 120 in den Gasspeicher 10 fließen.

Das Ventil 130 kann wieder geschlossen werden, wenn eine gewünschte Masse des Füllgases (gewünschte Gasfüllmenge) aus dem Gaspufferspeicher 120 geströmt ist, was mittels der Wägevorrichtung 140 hinreichend präzise ermittelt werden kann.

Die zweite fluidische Verbindung 192 kann flexibel oder starr sein.

Außerdem kann eine Länge der zweiten fluidischen Verbindung 192 relativ groß sein, zum Beispiel bis zu mehrerer Meter oder sogar bis zu mehrere 10 m betragen.

Insbesondere bei größeren Leitungslägen der zweiten fluidischen Verbindung 192, z.B. oberhalb von einigen Metern, wird typischerweise wird das Innenvolumen der fluidischen Verbindungen 191, 192 bei der Bestimmung der gewünschten Masse des Füllgases berücksichtigt.

In Figur 1B wird eine schematische Ansicht auf die Vorrichtung 100 gezeigt, die einer Ansicht von links auf die Vorrichtung 100 in Figur 1A entspricht, wobei aus Gründen der Übersichtlichkeit die optionale Bodenplatte 111 nicht dargestellt ist.

Figur 1C zeigt eine schematische Ansicht auf eine Vorrichtung 100', die ähnlich zur oben mit Bezug zu den Figuren 1A, 1B erläuterte Vorrichtung 100 ist. Figur 1A kann sogar einer entsprechenden schematischen Ansicht der Vorrichtung 100 entsprechend, wobei Figur 1C dann einer Ansicht von rechts entspricht.

Wie in Figur 1C dargestellt wird, kann das zweite Ende 122 des Gaspufferspeichers 120 zusätzlich in einer vertikal orientierte Führung 170, die mit der Bodenplatte 50 verbunden sein kann, geführt werden. Dadurch kann eine translatorische Bewegung des zweiten Endes 122 des Gaspufferspeichers 120 in eine zur ersten Achse parallelen Richtung y, -y zuverlässig eingeschränkt werden.

Im Ergebnis ist die Bewegung des Gaspufferspeichers 120 (bzw. seiner Längsachse e) bzgl. des Rahmens oder Gehäuses 110 bzw. des Bodens 50 beim Befüllen des Gasspeichers 10 zumindest im Wesentlichen auf eine Drehbewegung um die zur y-Richtung parallele erste Achse eingeschränkt (siehe auch die zweiköpfigen Pfeile in Fig. 1A).

Fig. 2A zeigt eine schematische Seitenansicht einer Vorrichtung 200 zum Befüllen von Gasspeichern 10 über einen Gaspufferspeicher 220. Die Vorrichtung 200 ist typischerweise ähnlich zu den oben mit Bezug zu den Figuren 1A bis 1C erläuterten Vorrichtungen 100, 100'.

Die Befüllvorrichtung 200 hat jedoch eine Steuer- oder Regeleinheit 280, die sowohl mit dem ersten Ventil 230 als auch der detaillierter dargestellten Wägevorrichtung 240 verbunden ist, um Messwerte von der Wägevorrichtung 240 zu erhalten, und basieren darauf das erste Ventil 230 zu öffnen bzw. zu schließen oder sogar zu steuern (siehe die gestrichelten Pfeile, die auch die Richtung des Informationsflusses anzeigen).

Beispielsweise kann das erste Ventil 230 von der Steuer-oder Regeleinheit 280 geschlossen werden, wenn gemäß übermittelte Daten der Wägevorrichtung 240 eine vorgegebene Gewichtsabnahme des Gaspufferspeichers 220 erreicht wird.

In dem exemplarischen Ausführungsbeispiel ist die Steuer- oder Regeleinheit 280 zudem mit einem am und/oder im Gaspufferspeicher 220 angebrachten ersten Temperatursensor(en) 262, einem am und/oder im Gasspeicher 10 angebrachten zweiten Temperatursensor(en) 264, einem mit dem zweiten Ende 222 fluidisch verbundenen ersten Drucksensor 261 und einem mit der zweiten fluidischen Verbindung 292 fluidisch verbundenen zweiten Drucksensor 263 verbunden.

Die mittels der Sensoren 261-264 an die Steuer- oder Regeleinheit 280 übermittelten jeweiligen Daten können wie oben erläutert zum Steuern des Befüllvorgang und/oder zum Detektieren einer Gefährdungssituation verwendet werden. Wenn eine derartige Gefährdungssituation detektiert wurde, kann zudem von der Steuer- oder Regeleinheit 280 eine Sicherheitsmaßnahme, zum Beispiel das Schließen des ersten Ventils 230 eingeleitet werden.

In Figur 2B wird eine schematische Ansicht auf die Vorrichtung 200 gezeigt, die einer Ansicht von links auf die Vorrichtung 100 in Figur 1A entspricht. Darin wird das Klemmlager 260 detaillierte dargestellt.

Figur 2C zeigt die Vorrichtung 200 in einer schematischen Ansicht von oben, in der das Klemmlager 260 ebenfalls detaillierter dargestellt wird. Außerdem zeigt Figur 2C eine Befestigungsplatte 241, mit der die Wägevorrichtung 240 am Rahmen 210 befestigt ist.

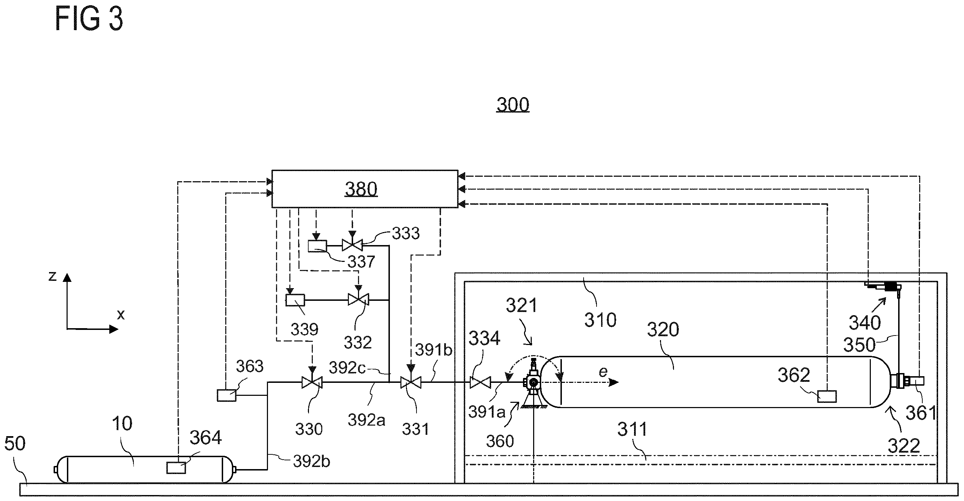

Fig. 3 zeigt eine schematische Seitenansicht einer Vorrichtung 300 zum Befüllen von Gasspeichern 10 über einen Gaspufferspeicher 320. Die Vorrichtung 300 ist typischerweise ähnlich zu den oben mit Bezug zu den Figuren 2A bis 2C erläuterten Vorrichtung 200.

Die Befüllvorrichtung 300 hat ebenfalls eine Steuer- oder Regeleinheit 380, die jedoch mit weiteren Ventilen verbunden ist und diese öffnen, schließen und oder sogar steuern oder regeln kann.

Außerdem kann innerhalb des Rahmens 310 ein typischerweise manuell bedienbares Absperrventil 334 vorgesehen sein, dass über die flexible erste fluidische Verbindung 391a fluidisch mit dem ersten Ende 321 des Gaspufferspeichers 320 verbunden ist. Das Absperrventil 334 kann beim Transport der Vorrichtung 300 aus Sicherheitsgründen einen Verschluss des Gaspufferspeichers 320 gewährleisten.

Wie in Figur 3 dargestellt wird, kann zwischen dem über die zweite fluidische Verbindung 392b mit dem Gasspeicher verbundenen ersten Ventil 330 und den Absperrventil 334 bzw. dem ersten Ende 321 ein typischerweise ebenfalls steuerbares zweites Ventil 331 vorgesehen sein, dass über eine fluidische Verbindung 391b mit dem Absperrventil 334 verbunden ist.

Dieser Aufbau ermöglicht das einfache Einbinden bzw. Steuern oder Regeln weiterer nützlicher Komponenten der Vorrichtung 300.

Außerdem sei angemerkt, dass das Ventil 331 auch als erstes Ventil und das Ventil 330 auch als zweites Ventil betrachtet werden können.

In dem exemplarischen Ausführungsbeispiel zweigt von einer fluidischen Verbindung 392a zwischen den ersten Ventil 330 und dem zweiten Ventil 331 eine weitere fluidische Verbindung 392c ab.

Insbesondere kann über die weitere fluidische Verbindung 392c und ein entsprechendes Ventil 332 ein Kompressor 339 zum Befüllen des Gaspufferspeichers 320 angeschlossen sein.

Weiterhin kann über die weitere fluidische Verbindung 392c und ein entsprechendes Ventil 333 ein Gasspühleinrichtung 337 zum Reinigen des Gaspufferspeichers 320 angeschlossen sein.

Außerdem kann über die weitere fluidische Verbindung 392c und ein weiteres nicht dargestelltes Ventil eine ebenfalls nichtdargestellte Vakuumpumpe angeschlossen sein, die ebenfalls zum Reinigen des Gaspufferspeichers 320 verwendet werden kann.

Schließlich kann zwischen dem Absperrventil 334 und dem ersten Ende 321 ein mit der ersten fluidischen Verbindung 391a verbundenes, nicht dargestelltes Ablassventil, und/oder ein Überdruckventil bzw. eine Berstscheibe verbunden sein.

Die hierin beschriebenen Vorrichtungen (Druckgasbefüllvorrichtungen) ermöglichen eine hohe Gewichtsauflösung beim Befüllen der Gasspeicher. Dies ist insbesondere für zu befüllende Gasdruckbehälter (Druckgasspeicher) von Bedeutung, insbesondere dann, wenn die zu befüllenden Gasdruckbehälter bei einer Sicherheitsprüfung, z.B. für eine Brandsicherheitsprüfung (insbesondere eine Brandwiderstandsprüfung) oder zum Prüfen eines Ventils verwendet werden sollen. Hierbei ist zu beachten, dass die Leermasse derartiger Behälter im Vergleich zur Füllmasse des darin speicherbaren Mediums (z.B. komprimiertes Erdgas bei einem Druck von 200 bar) üblicherweise vergleichsweise hoch ist.

Gemäß einer Ausführungsform werden die hierin beschriebenen Vorrichtungen (Druckgasbefüllvorrichtungen) zum Befüllen eines Gasspeichers für eine Sicherheitsprüfung, insbesondere eines Gasdruckbehälters für eine Sicherheitsprüfung verwendet. Bei der Sicherheitsprüfung kann es sich bspw. um eine Brandsicherheitsprüfung, bei der der befüllte Gasspeicher als Prüfmuster dient, aber auch um eine Ventilprüfung handeln.

Die vorliegende Erfindung wurde anhand von Ausführungsbeispielen erläutert. Diese Ausführungsbeispiele sollten keinesfalls als einschränkend für die vorliegende Erfindung verstanden werden. Die nachfolgenden Ansprüche stellen einen ersten, nicht bindenden Versuch dar, die Erfindung allgemein zu definieren.

## Patentansprüche

1.  Vorrichtung (100, 100', 200, 300) zum Befüllen von Gasspeichern (10), umfassend:

    - einen Rahmen (110, 210, 310) und/oder ein Gehäuse;
    - einen zum Rahmen und/oder zum Gehäuse beweglich angeordneten und um eine zumindest im Wesentlichen horizontal orientierte erste Achse (y) drehbar gelagerten Gaspufferspeicher (120, 220, 320) für ein Gas;
    - ein erstes Ventil (130, 230, 330, 331) aufweisend einen mit dem Gaspufferspeicher (120, 220, 320) verbundenen Eingang und einen Ausgang zum Verbinden mit einem zu befüllenden Gasspeicher (10); und
    - eine mit dem Gaspufferspeicher (120, 220, 320) verbundene Wägevorrichtung (140, 240, 340) zum Wiegen des Gaspufferspeichers (120, 220, 320).

2.  Vorrichtung (100, 100', 200, 300) nach Anspruch 1, wobei der Gaspufferspeicher (120, 220, 320) ein typischerweise mit Wasser ausgelitertes Innenvolumen von mindestens 10 l, von mindestens 200 l oder sogar von mindestens 500 l aufweist, und/oder wobei der Gaspufferspeicher (120, 220, 320) eine Druckfestigkeit von zumindest 200 bar, zumindest 700 bar, zumindest 1000 bar oder sogar zumindest 1200 bar aufweist, und/oder wobei der Gasspeicher (10) ein Gasdruckbehälter, insbesondere ein einer Sicherheitsprüfung zu unterziehender Gasdruckbehälter ist, und/oder wobei der Gaspufferspeicher (120, 220, 320) zumindest im Wesentlichen zylinderförmig ist, und/oder wobei der Gaspufferspeicher (120, 220, 320) innerhalb des Rahmens und/oder des Gehäuses angeordnet ist, und/oder wobei der der Gaspufferspeicher (120, 220, 320) so gelagert ist, dass eine Bewegung des Gaspufferspeicher (120, 220, 320) beim Befüllen des Gasspeichers (10) zumindest im Wesentlichen auf eine Drehbewegung um die erste Achse (y) eingeschränkt ist.

3.  Vorrichtung (100, 100', 200, 300) nach Anspruch 2, wobei der Gaspufferspeicher (120, 220, 320) an einem ersten Ende (121, 221, 321) mittels eines Klemmlagers (160, 260, 360) gelagert ist, das eine Rotationsbewegung des Gaspufferspeichers (120, 220, 320) um die zur ersten Achse (y) senkrecht orientierte Achsen (x, z) hemmt, translatorisch in alle Richtungen fest mit dem Rahmen und/oder dem Gehäuse verbunden ist, und eine Rotation um die erste Achse (y) zulässt, und/oder wobei der Gaspufferspeicher (120, 220, 320) an einem dem ersten Ende (121, 221, 321) gegenüberliegenden zweiten Ende (122, 222, 322) in zur ersten Achse (y) senkrecht orientierten Richtungen (x, z) beweglich gelagert.

4.  Vorrichtung (100, 100', 200, 300) nach Anspruch 3, umfassend eine zumindest im Wesentlichen vertikal orientierte Führung (170) zur Beschränkung einer translatorischen Bewegung des zweiten Endes (122, 222, 322) des Gaspufferspeichers (120, 220, 320) in eine zur ersten Achse (y) parallelen Richtung, und/oder wobei das zweite Ende (122, 222, 322) über die Wägevorrichtung (140, 240, 340) mit dem Rahmen und/oder dem Gehäuse verbunden ist.

5.  Vorrichtung (100, 100', 200, 300) nach einem der vorangehenden Ansprüche, wobei die Wägevorrichtung (140, 240, 340) eine Wägezelle umfasst und/oder eine Wägezelle ist, und/oder wobei die Wägezelle einen Dehnungsmessstreifen umfasst, wobei die Wägevorrichtung (140, 240, 340) fest mit dem Rahmen (110, 210, 310) und/oder dem Gehäuse verbunden ist, wobei die Wägevorrichtung (140, 240, 340) über mindestens ein Gelenk (145) mit dem Gaspufferspeicher (120, 220, 320) verbunden ist, wobei eine Drehachse des mindestens einen Gelenks (145) parallel zur ersten Achse (y) ist, wobei die Wägevorrichtung (140, 240, 340) über ein flexibles Verbindungselement (150, 250) mit dem Gaspufferspeicher (120, 220, 320) verbunden ist, wobei die Wägevorrichtung (140, 240, 340) einen Wägebereich bis zumindest 10 kg oder sogar 1000 kg aufweist, und/oder wobei die Wägevorrichtung (140, 240, 340) je nach Gasart und zu befüllender Gasmenge eine dem Druck entsprechende Gewichtsauflösung aufweist, die äquivalent zu einer Auflösung des Druckes im Gasspeichern (10) von zumindest 2 bar oder sogar mindestens 1 bar ist.

6.  Vorrichtung (100, 100', 200, 300) nach Anspruch 5, wobei das flexible Verbindungselement mit dem zweiten Ende (122, 222) des Gaspufferspeichers (120, 220, 320) verbunden ist, und/oder wobei das flexibles Verbindungselement ein Seil, einen biegeweichen Stab und/oder eine Kette umfasst, und/oder von einem Seil, einem biegeweichen Stab oder einer Kette gebildet wird, wobei das Seil oder die Kette optional Stahl umfasst und/oder aus Stahl besteht.

7.  Vorrichtung (100, 100', 200, 300) nach einem der vorangehenden Ansprüche, wobei ein Eingang des ersten Ventils (130, 230, 330, 331) fluidisch mit dem Gaspufferspeicher (120, 220, 320) verbundenen ist, und wobei der Gaspufferspeicher (120, 220, 320) und der Eingang des ersten Ventils (130, 230, 330, 331) über eine flexible erste fluidische Verbindung (191, 291, 391a) und/oder mindestens ein zweites Ventil (331, 330, 334) miteinander verbunden sind.

8. Vorrichtung (100, 100', 200, 300) nach Anspruch 7, wobei die flexible erste fluidische Verbindung (191, 291, 391a) ein Schlauch oder eine Rohrspirale umfasst, wobei die flexible erste fluidische Verbindung (191, 291) eine Druckfestigkeit von zumindest 200 bar, zumindest 700 bar, zumindest 1000 bar oder sogar zumindest 1200 bar aufweist, und/oder wobei das erste Ventil (130, 230, 330, 331) steuerbar und/oder regelbar ist.

9. Vorrichtung (100, 100', 200, 300) nach Anspruch 7 oder 8, weiter umfassend eine Steuer- oder Regeleinheit (280), die mit dem ersten Ventil (130, 230, 330, 331) und/oder der Wägevorrichtung (140, 240, 340) verbunden ist, und eingerichtet ist, ein Öffnen und/oder ein Schließen des jeweiligen Ventils auszulösen, und/oder Messwerte von der Wägevorrichtung zu erhalten.

10. Vorrichtung (100, 100', 200, 300) nach Anspruch 9, wobei die Steuer- oder Regeleinheit (280, 380) eingerichtet ist, das Schließen des ersten Ventils auszulösen, wenn die Messwerte eine vorgebbare Schwelle erreichen oder unterschreiten und/oder eine vorgebbare Differenz zu einem initialen Messwert vor einem Öffnen des ersten Ventils erreichen oder überschreiten.

11. Vorrichtung (100, 100', 200, 300) nach einem der vorangehenden Ansprüche, weiter umfassend:

    - einen an dem Gaspufferspeicher (120, 220, 320) angeordneten ersten Temperatursensor (262), und/oder einen an dem zu befüllenden Gasspeicher (10) anordnenbaren zweiten Temperatursensor (264);
    - einen mit dem Gaspufferspeicher (120, 220, 320) fluidisch verbundenen ersten Drucksensor (261, 361);
    - eine zweite fluidische Verbindung (192, 292, 392b), die mit dem Ausgang des ersten Ventils (130, 230, 330) verbunden ist;
    - einen mit dem zu befüllenden Gasspeicher (10) verbindbaren und/oder mit der zweiten fluidischen Verbindung (192, 292, 392b) verbundenen zweiten Drucksensor (263, 362);
    - einen mit dem Gaspufferspeicher (120, 220, 320) fluidisch verbundenen weiteren Gaspufferspeicher, wobei der weitere Gaspufferspeicher optional mechanisch mit der Wägevorrichtung (140, 240, 340) und/oder dem Gaspufferspeicher (120, 220, 320) verbunden ist;
    - eine Temperierungseinheit zum Einstellen und/oder Absenken einer Temperatur des Gaspufferspeichers (120, 220, 320);
    - vier mit dem Rahmen (110, 210, 310) und/oder dem Gehäuse verbundene Räder, Staplertaschen, Transport- und/oder Anschlagösen;

    - einen Kompressor (339) und ein drittes Ventil (332), wobei der Kompressor (339) über das dritte Ventil (332) mit dem Gaspufferspeicher (120, 220, 320) fluidisch verbindbar ist;
    - eine Spühleinheit (337) und ein viertes Ventil (333), wobei die Spühleinheit (337) über das vierte Ventil (333) mit dem Gaspufferspeicher (120, 220, 320) fluidisch verbindbar ist; und/oder
    - eine Evakuiereinheit und ein fünftes Ventil, wobei die Evakuiereinheit über das fünfte Ventil (333) mit dem Gaspufferspeicher (120, 220, 320) fluidisch verbindbar ist.

12. Vorrichtung (100, 200, 300) nach Anspruch 11, wobei der erste Temperatursensor (262) mit der Steuer- oder Regeleinheit (280, 380) und/oder einer Anzeigeeinheit verbunden sind, wobei die Steuer- oder Regeleinheit (280, 380) eingerichtet ist, das Öffnen des ersten Ventils (230) zum Befüllen des zu befüllenden Gasspeichers (10) erst dann auszulösen, wenn ein vom ersten Temperatursensor (262) übermittelter Temperaturmesswert einen vorgebbaren ersten Schwellenwert erreicht oder unterschreitet, wobei die Steuer- oder Regeleinheit (280) eingerichtet ist, das Schließen des ersten Ventils (230) auszulösen, wenn der vom ersten Temperatursensor (262) übermittelte Temperaturmesswert einen vorgebbaren zweiten Schwellenwert erreicht oder überschreitet, wobei der erste Drucksensor (261, 361) und/oder der zweite Drucksensor (263, 363) mit der Steuer- oder Regeleinheit (280) und/oder der Anzeigeeinheit verbunden sind, wobei die Steuer-oder Regeleinheit (280) eingerichtet ist, das Öffnen des ersten Ventils (230, 330) zum Befüllen des zu befüllenden Gasspeichers (10) erst dann auszulösen, wenn ein vom ersten Drucksensor (261, 361) übermittelter Druckmesswert einen vorgebbaren Schwellenwert erreicht oder überschreitet, und/oder wobei die Steuer- oder Regeleinheit (280, 380) eingerichtet ist, das Schließen des ersten Ventils (230. 330) auszulösen, wenn ein vom zweiten Drucksensor (263, 363) übermittelter Druckmesswert einen vorgebbaren weiteren Schwellenwert erreicht oder überschreitet.

13. Vorrichtung (100, 100', 200, 300) nach Anspruch 11 oder 12, wobei das mindestens eine zweites Ventil (331, 334) zwischen dem ersten Ventil (330) und dem Gaspufferspeicher (320) angeordnet ist, wobei das mindestens eine zweite Ventil (331, 334) zwischen dem dritten Ventil (332) und dem Gaspufferspeicher (320) angeordnet ist, wobei das mindestens eine zweite Ventil (331, 334) zwischen dem vierten Ventil (333) und dem Gaspufferspeicher (320) angeordnet ist, wobei der Kompressor (339), die Spühleinheit (337), die Evakuiereinheit, das dritte Ventil (332), das vierte Ventil (333), und/oder das fünfte Ventil steuerbar und/oder regelbar und mit der Steuer- oder Regeleinheit (280, 380) verbunden sind wobei das erste Ventil, das mindestens eine zweite Ventil, das dritte Ventil, das vierte Ventil und/oder das fünfte Ventil Magnetventile sind, druckluftgesteuert sind, und/oder in einem jeweiligen unversorgten Zustand geschlossen sind.

14. Prüfvorrichtung, insbesondere Brandsicherheitsprüfvorrichtung umfassend eine Vorrichtung (100, 100', 200, 300) nach einem der vorangehenden Ansprüche, wobei der Ausgang des ersten Ventils (130, 230, 330, 331) typischerweise fluidisch mit einem zu prüfenden Ventil verbunden ist.

15. Verwenden einer Vorrichtung (100, 100', 200, 300) nach einem der Ansprüche 1 bis 13 zum Befüllen eines Gasspeichers (10), insbesondere eines Gasdruckbehälters, oder für eine Sicherheitsprüfung, insbesondere für eine Brandsicherheitsprüfung oder eine Ventilprüfung.

## Claims

1. A device (100, 100', 200, 300) for filling gas storage tanks (10), comprising:

   - a frame (110, 210, 310) and/or a housing;
   - a gas buffer storage tank (120, 220, 320) for a gas, the gas buffer storage tank (120, 220, 320) being arranged movably relative to the frame and/or the housing and mounted rotatably about an at least substantially horizontally oriented first axis (y);
   - a first valve (130, 230, 330, 331) having an inlet connected to the gas buffer storage tank (120, 220, 320) and an outlet for connection to a gas storage tank (10) to be filled; and
   - a weighing device (140, 240, 340) connected to the gas buffer storage tank (120, 220, 320) for weighing the gas buffer storage tank (120, 220, 320).

2. The device (100, 100', 200, 300) according to claim 1, wherein the gas buffer storage tank (120, 220, 320) has an internal volume typically gauged by liters of water of at least 10l, at least 200 l or even at least 500 l, and/or wherein the gas buffer storage tank (120, 220, 320) has a pressure resistance of at least 200 bar, at least 700 bar, at least 1000 bar or even at least 1200 bar, and/or wherein the gas storage tank (10) is a gas pressure vessel, in particular a gas pressure vessel to be subjected to a safety test, and/or wherein the gas buffer storage tank (120, 220, 320) is at least substantially cylindrical, and/or wherein the gas buffer storage tank (120, 220, 320) is arranged within the frame and/or the housing, and/or wherein the gas buffer storage tank (120, 220, 320) is mounted such that a movement of the gas buffer storage tank (120, 220, 320) during filling of the gas storage tank (10) is at least substantially restricted to a rotational movement about the first axis (y).

3. The device (100, 100', 200, 300) according to claim 2, wherein the gas buffer storage tank (120, 220, 320) is mounted at a first end (121, 221, 321) by means of a clamp bearing (160, 260, 360), which inhibits a rotational movement of the gas buffer storage tank (120, 220, 320) about axes (x, z) oriented perpendicular to the first axis (y), is fixedly connected to the frame and/or the housing in all directions in terms of translation, and permits rotation about the first axis (y), and/or wherein the gas buffer storage tank (120, 220, 320) is movably mounted at a second end (122, 222, 322) opposite the first end (121, 221, 321) in directions (x, z) oriented perpendicularly to the first axis (y).

4. The device (100, 100', 200, 300) according to claim 3, comprising an at least substantially vertically oriented guide (170) for restricting a translational movement of the second end (122, 222) of the gas buffer storage tank (120, 220, 320) in a direction parallel to the first axis (y), and/or wherein the second end (122, 222, 322) is connected to the frame and/or the housing via the weighing device (140, 240, 340).

5. The device (100, 100', 200, 300) according to one of the preceding claims, wherein the weighing device (140, 240, 340) comprises a load cell and/or is a load cell, and/or wherein the load cell comprises a strain gauge, wherein the weighing device (140, 240, 340) is firmly connected to the frame (110, 210, 310) and/or the housing, wherein the weighing device (140, 240, 340) is connected to the gas buffer storage tank (120, 220, 320) via at least one joint (145), wherein an axis of rotation of the at least one joint (145) is parallel to the first axis (y), wherein the weighing device (140, 240, 340) is connected to the gas buffer storage tank (120, 220, 320) via a flexible connecting element (150, 250), wherein the weighing device (140, 240, 340) has a weighing range of up to at least 10 kg or even 1000 kg, and/or wherein the weighing device (140, 240, 340) has a weight resolution corresponding to the pressure, which is equivalent to a resolution of the pressure in the gas storage tank (10) of at least 2 bar or even at least 1 bar, depending on the type of gas and the quantity of gas to be filled.

6. The device (100, 100', 200, 300) according to claim 5, wherein the flexible connecting element is connected to the second end (122, 222) of the gas buffer storage tank (120, 220, 320), and/or wherein the flexible connecting element comprises a rope, a flexible rod and/or a chain, and/or is formed by a rope, a flexible rod or a chain, wherein the rope or the chain optionally comprises and/or is made of steel.

7. The device (100, 100', 200, 300) according to one of the preceding claims, wherein the inlet of the first valve (130, 230, 330, 331) is fluidically connected to the gas buffer storage tank (120, 220, 320), and wherein the gas buffer storage tank (120, 220, 320) and the inlet of the first valve (130, 230, 330, 331) are connected to each other via a flexible first fluidic connection (191, 291, 391a) and/or at least one second valve (331, 330, 334).

8. The device (100, 100', 200, 300) according to claim 7, wherein the flexible first fluidic connection (191, 291, 391a) comprises a hose or a pipe spiral, wherein the flexible first fluidic connection (191, 291) has a pressure resistance of at least 200 bar, at least 700 bar, at least 1000 bar or even at least 1200 bar, and/or wherein the first valve (130, 230, 330, 331) is controllable and/or adjustable.

9. The device (100, 100', 200, 300) according to claim 7 or 8, further comprising a control unit (280) which is connected to the first valve (130, 230, 330, 331) and/or the weighing device (140, 240, 340), and is set up to trigger an opening and/or a closing of the respective valve, and/or to obtain measured values from the weighing device.

10. The device (100, 100', 200, 300) according to claim 9, wherein the control unit (280, 380) is set up to trigger the closing of the first valve when the measured values reach or fall below a predeterminable threshold and/or reach or exceed a predeterminable difference from an initial measured value before the first valve is opened.

11. The device (100, 100', 200, 300) according to any one of the preceding claims, further comprising:

- a first temperature sensor (262) arranged on the gas buffer storage tank (120, 220, 320), and/or a second temperature sensor (264) which can be arranged on the gas storage tank (10) to be filled;
- a first pressure sensor (261, 361) fluidically connected to the gas buffer tank (120, 220, 320);
- a second fluidic connection (192, 292, 392b) connected to the outlet of the first valve (130, 230, 330);
- a second pressure sensor (263, 362) connectable to the gas storage tank (10) to be filled and/or connected to the second fluidic connection (192, 292, 392b);
- a further gas buffer storage tank fluidically connected to the gas buffer storage tank (120, 220, 320), wherein the further gas buffer storage tank is optionally mechanically connected to the weighing device (140, 240, 340) and/or the gas buffer storage tank (120, 220, 320);
- a temperature control unit for adjusting and/or lowering a temperature of the gas buffer storage tank (120, 220, 320);
- four wheels connected to the frame (110, 210, 310) and/or the housing, forklift pockets, transport and/or lifting eyes;
- a compressor (339) and a third valve (332), wherein the compressor (339) can be fluidically connected to the gas buffer tank (120, 220, 320) via the third valve (332);
- a purge unit (337) and a fourth valve (333), wherein the purge unit (337) can be fluidically connected to the gas buffer storage tank (120, 220, 320) via the fourth valve (333); and/or
- an evacuation unit and a fifth valve, wherein the evacuation unit can be fluidically connected to the gas buffer tank (120, 220, 320) via the fifth valve (333).

12. The device (100, 200, 300) according to claim 11, wherein the first temperature sensor (262) is connected to the control unit (280, 380) and/or a display unit, wherein the control unit (280, 380) is set up to trigger the opening of the first valve (230) for filling the gas storage tank (10) to be filled only when a temperature measured value transmitted by the first temperature sensor (262) reaches or falls below a predeterminable first threshold value, wherein the control unit (280) is set up to trigger the closing of the first valve (230) for filling the gas storage tank (10) to be filled, when a measured temperature value transmitted by the first temperature sensor (262) reaches or falls below a predeterminable first threshold value, the control unit (280) being set up to trigger the closing of the first valve (230), when the measured temperature value transmitted by the first temperature sensor (262) reaches or exceeds a predeterminable second threshold value, wherein the first pressure sensor (261, 361) and/or the second pressure sensor (263, 363) are connected to the control unit (280) and/or the display unit, wherein the control unit (280) is configured to triggering the opening of the first valve (230, 330) for filling the gas storage tank (10) to be filled only when a measured pressure value transmitted by the first pressure sensor (261, 361) reaches or exceeds a predeterminable threshold value, and/or wherein the control unit (280, 380) is set up to trigger the closing of the first valve (230, 330) when a measured pressure value transmitted by the second pressure sensor (263, 363) reaches or exceeds a predeterminable further threshold value.

13. The device (100, 100', 200, 300) according to claim 11 or 12, wherein the at least one second valve (331, 334) is arranged between the first valve (330) and the gas buffer storage (320), wherein the at least one second valve (331, 334) is arranged between the third valve (332) and the gas buffer storage (320), wherein the at least one second valve (331, 334) is arranged between the fourth valve (333) and the gas buffer storage (320), wherein the compressor (339), the purge unit (337), the evacuation unit, the third valve (332), the fourth valve (333), and/or the fifth valve are controllable and/or adjustable and connected to the control unit (280, 380), wherein the first valve, the at least one second valve, the third valve, the fourth valve and/or the fifth valve are solenoid valves, are controlled by compressed air, and/or are closed in a respective unsupplied state.

14. A testing device, in particular a fire safety testing device comprising a device (100, 100', 200, 300) according to one of the preceding claims, wherein the outlet of the first valve (130, 230, 330, 331) is typically fluidically connected to a valve to be tested.

15. Use of a device (100, 100', 200, 300) according to any one of claims 1 to 13 for filling a gas storage tank (10), in particular a gas pressure vessel, or for a safety test, in particular for a fire safety test or a valve test.

## Revendications

1. Dispositif (100, 100', 200, 300) de remplissage de réservoirs de gaz (10), comprenant :

   - un châssis (110, 210, 310) et/ou un boîtier ;
   - un réservoir tampon de gaz (120, 220, 320) pour un gaz disposé de manière mobile par rapport au châssis et/ou au boîtier et monté de manière à pouvoir tourner autour d'un premier axe (y) orienté au moins de manière sensiblement horizontale ;
   - une première vanne (130, 230, 330, 331) présentant une entrée raccordée au réservoir tampon de gaz (120, 220, 320) et une sortie destinée à être raccordée à un réservoir de gaz (10) à remplir ; et
   - un dispositif de pesage (140, 240, 340) raccordé au réservoir tampon de gaz (120, 220, 320) destiné à peser le réservoir tampon de gaz (120, 220, 320).

2. Dispositif (100, 100', 200, 300) selon la revendication 1, dans lequel le réservoir tampon de gaz (120, 220, 320) présente un volume intérieur présentant une contenance classique en eau d'au moins 10 l, d'au moins 200 l voire d'au moins 500 l et/ou dans lequel le réservoir tampon de gaz (120, 220, 320) présente une résistance à la pression d'au moins 200 bar, d'au moins 700 bar, d'au moins 1000 bar voire d'au moins 1200 bar, et/ou dans lequel le réservoir de gaz (10) est un contenant de gaz sous pression, en particulier un contenant de gaz sous pression devant être soumis à un contrôle de sécurité et/ou dans lequel le réservoir tampon de gaz (120, 220, 320) est au moins sensiblement de forme cylindrique et/ou dans lequel le réservoir tampon de gaz (120, 220, 320) est disposé à l'intérieur du châssis et/ou du boîtier, et/ou dans lequel le réservoir tampon de gaz (120, 220, 320) est monté de telle sorte qu'un déplacement du réservoir tampon de gaz (120, 220, 320) est restreint au moins sensiblement à un déplacement par rotation autour du premier axe (y) lors du remplissage du réservoir de gaz (10).

3. Dispositif (100, 100', 200, 300) selon la revendication 2, dans lequel le réservoir tampon de gaz (120, 220, 320) est monté sur une première extrémité (121, 221, 321) au moyen d'un palier de serrage (160, 260, 360), qui empêche un déplacement par rotation du réservoir tampon de gaz (120, 220, 320) autour des axes (x, z) orientés de manière perpendiculaire par rapport au premier axe (y), est raccordé de manière solidaire au châssis et/ou au boîtier par translation dans toutes les directions, et autorise une rotation autour du premier axe (y), et/ou dans lequel le réservoir tampon de gaz (120, 220, 320) est monté de manière mobile dans des directions (x, z) orientées de manière perpendiculaire par rapport au premier axe (y) sur une deuxième extrémité (122, 222, 322) opposée à la première extrémité (121, 221, 321).

4. Dispositif (100, 100', 200, 300) selon la revendication 3, comprenant un guidage (170) orienté au moins de manière sensiblement verticale destiné à limiter un déplacement par translation de la deuxième extrémité (122, 222) du réservoir tampon de gaz (120, 220, 320) dans une direction parallèle par rapport au premier axe (y), et/ou dans lequel la deuxième extrémité (122, 222, 322) est raccordée au châssis et/ou au boîtier par l'intermédiaire du dispositif de pesage (140, 240, 340).

5. Dispositif (100, 100', 200, 300) selon l'une quelconque des revendications précédentes, dans lequel le dispositif de pesage (140, 240, 340) comprend une cellule de pesage et/ou est une cellule de pesage, et/ou dans lequel la cellule de pesage comprend une jauge de contrainte, dans lequel le dispositif de pesage (140, 240, 340) est raccordé de manière solidaire au châssis (110, 210, 310) et/ou au boîtier, dans lequel le dispositif de pesage (140, 240, 340) est raccordé au réservoir tampon de gaz (120, 220, 320) par l'intermédiaire d'au moins une articulation (145), dans lequel un axe de rotation de l'au moins un articulation (145) est parallèle par rapport au premier axe (y), dans lequel le dispositif de pesage (140, 240, 340) est raccordé au réservoir tampon de gaz (120, 220, 320) par l'intermédiaire d'un élément de raccordement (150, 250) flexible, dans lequel le dispositif de pesage (140, 240, 340) présente une zone de pesage jusqu'à au moins 10 kg voire 1000 kg, et/ou dans lequel le dispositif de pesage (140, 240, 340) présente selon le type de gaz et la quantité de gaz à remplir une dissolution de poids correspondant à la pression, qui est équivalente à une dissolution de la pression dans le réservoir de gaz (10) d'au moins 2 bar voire d'au moins 1 bar.

6. Dispositif (100, 100', 200, 300) selon la revendication 5, dans lequel l'élément de raccordement flexible est raccordé à la deuxième extrémité (122, 222) du réservoir tampon de gaz (120, 220, 320), et/ou dans lequel l'élément de raccordement flexible comprend un câble, une barre souple en flexion et/ou une chaîne et/ou est formé par un câble, une barre souple en flexion ou une chaîne, dans lequel le câble ou la chaîne comprend en option de l'acier et/ou est constitué d'acier.

7. Dispositif (100, 100', 200, 300) selon l'une quelconque des revendications précédentes, dans lequel une entrée de la première vanne (130, 230, 330, 331) est raccordée de manière fluidique au réservoir tampon de gaz (120, 220, 320), et dans lequel le réservoir tampon de gaz (120, 220, 320) et l'entrée de la première vanne (130, 230, 330, 331) sont raccordés l'un à l'autre par l'intermédiaire d'un premier raccord fluidique flexible (191, 291, 391a) et/ou d'au moins une deuxième vanne (331, 330, 334).

8. Dispositif (100, 100', 200, 300) selon la revendication 7, dans lequel le premier raccord fluidique flexible (191, 291, 391a) comprend un tuyau flexible ou une spirale tubulaire, dans lequel le premier raccord fluidique flexible (191, 291) présente une résistance à la pression d'au moins 200 bar, d'au moins 700 bar, d'au moins 1000 bar voire d'au moins 1200 bar, et/ou dans lequel la première vanne (130, 230, 330, 331) peut être commandée et/ou régulée.

9. Dispositif (100, 100', 200, 300) selon la revendication 7 ou 8, comprenant par ailleurs une unité de commande ou de régulation (280), qui est raccordée à la première vanne (130, 230, 330, 331) et/ou au dispositif de pesage (140, 240, 340) et qui est mise au point pour déclencher une ouverture et/ou une fermeture de la vanne respective et/ou pour obtenir des valeurs de mesure du dispositif de pesage.

10. Dispositif (100, 100', 200, 300) selon la revendication 9, dans lequel l'unité de commande ou de régulation (280, 380) est mise au point pour déclencher la fermeture de la première vanne lorsque les valeurs de mesure atteignent ou ne dépassent pas un seuil pouvant être prédéfini et/ou atteignent ou dépassent une différence pouvant être prédéfinie par rapport à une valeur de mesure initiale avant une ouverture de la première vanne.

11. Dispositif (100, 100', 200, 300) selon l'une quelconque des revendications précédentes, comprenant par ailleurs :

   - un premier capteur de température (262) disposé sur le réservoir tampon de gaz (120, 220, 320) et/ou un deuxième capteur de température (264) pouvant être disposé sur le réservoir de gaz (10) à remplir ;
   - un premier capteur de pression (261, 361) raccordé de manière fluidique au réservoir tampon de gaz (120, 220, 320) ;
   - un deuxième raccord fluidique (192, 292, 392b), qui est raccordé à la sortie de la première vanne (130, 230, 330) ;
   - un deuxième capteur de pression (263, 362) pouvant être raccordé au réservoir de gaz (10) à remplir et/ou raccordé au deuxième raccord fluidique (192, 292, 392b) ;
   - un autre réservoir tampon de gaz raccordé de manière fluidique au réservoir tampon de gaz (120, 220, 320), dans lequel l'autre réservoir tampon de gaz est raccordé en option de manière mécanique au dispositif de pesage (140, 240, 340) et/ou au réservoir tampon de gaz (120, 220, 320) ;
   - une unité de thermorégulation destinée à régler et/ou à abaisser une température du réservoir tampon de gaz (120, 220, 320) ;
   - quatre roues, passages pour chariot élévateur, oeillets de transport et/ou de butée raccordés au châssis (110, 210, 310) et/ou au boîtier ;
   - un compresseur (339) et une troisième vanne (332), dans lequel le compresseur (339) peut être raccordé de manière fluidique au réservoir tampon de gaz (120, 220, 320) par l'intermédiaire de la troisième vanne (332) ;
   - une unité de rinçage (337) et une quatrième vanne (333), dans lequel l'unité de rinçage (337) peut être raccordée de manière fluidique au réservoir tampon de gaz (120, 220, 320) par l'intermédiaire de la quatrième vanne (333) ; et/ou
   - une unité d'évacuation et une cinquième vanne, dans lequel l'unité d'évacuation peut être raccordée de manière fluidique au réservoir tampon de gaz (120, 220, 320) par l'intermédiaire de la cinquième vanne (333).

12. Dispositif (100, 200, 300) selon la revendication 11, dans lequel le premier capteur de température (262) est raccordé à l'unité de commande ou de régulation (280, 380) et/ou à une unité d'affichage, dans lequel l'unité de commande ou de régulation (280, 380) est mise au point pour déclencher l'ouverture de la première vanne (230) pour remplir le réservoir de gaz (10) à remplir seulement lorsqu'une valeur de mesure de température transmise par le premier capteur de température (262) atteint ou ne dépasse pas une première valeur de seuil pouvant être prédéfinie, dans lequel l'unité de commande ou de régulation (280) est mise au point pour déclencher la fermeture de la première vanne (230) lorsque la valeur de mesure de température transmise par le premier capteur de température (262) atteint ou dépasse une deuxième valeur de seuil pouvant être prédéfinie, dans lequel le premier capteur de pression (261, 361) et/ou le deuxième capteur de pression (263, 363) sont raccordés à l'unité de commande ou de régulation (280) et/ou à l'unité d'affichage, dans lequel l'unité de commande ou de régulation (280) est mise au point pour déclencher l'ouverture de la première vanne (230, 330) pour remplir le réservoir de gaz (10) à remplir seulement lorsqu'une valeur de mesure de pression transmise par le premier capteur de pression (261, 361) atteint ou dépasse une valeur de seuil pouvant être prédéfinie, et/ou dans lequel l'unité de commande ou de régulation (280, 380) est mise au point pour déclencher la fermeture de la première vanne (230, 330) lorsqu'une valeur de mesure de pression transmise par le deuxième capteur de pression (263, 363) atteint ou dépasse une autre valeur de seuil pouvant être prédéfinie.

13. Dispositif (100, 100', 200, 300) selon la revendication 11 ou 12, dans lequel l'au moins une deuxième vanne (331, 334) est disposée entre la première vanne (330) et le réservoir tampon de gaz (320), dans lequel l'au moins une deuxième vanne (331, 334) est disposée entre la troisième vanne (332) et le réservoir tampon de gaz (320), dans lequel l'au moins une deuxième vanne (331, 334) est disposée entre la quatrième vanne (333) et le réservoir tampon de gaz (320), dans lequel le compresseur (339), l'unité de rinçage (337), l'unité d'évacuation, la troisième vanne (332), la quatrième vanne (333) et/ou la cinquième vanne peuvent être commandés et/ou régulés et sont raccordés à l'unité de commande ou de régulation (280, 380), dans lequel la première vanne, l'au moins une deuxième vanne, la troisième vanne, la quatrième vanne et/ou la cinquième vanne sont des électrovannes, sont commandées par air comprimé et/ou sont fermées dans un état respectivement sans alimentation.

14. Dispositif de contrôle, en particulier dispositif de contrôle de sécurité anti-incendie, comprenant un dispositif (100, 100', 200, 300) selon l'une quelconque des revendications précédentes, dans lequel la sortie de la première vanne (130, 230, 330, 331) est raccordée classiquement de manière fluidique à une vanne à contrôler.

15. Utilisation d'un dispositif (100, 100', 200, 300) selon l'une quelconque des revendications 1 à 13 pour remplir le réservoir de gaz (10), en particulier un contenant de gaz sous pression, ou pour un contrôle de sécurité, en particulier pour un contrôle de sécurité anti-incendie ou un contrôle de vanne.

FIG 1A

FIG 1B

FIG 1C

FIG 2A

FIG 2B

FIG 2C

FIG 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5096006 A